# EUROPEAN PATENT APPLICATION

(11) **EP 0 682 215 A1**
(43) Date of publication of application: **15.11.1995**
(21) Application number: 94830221.1
(22) Date of filing: 13.05.1994
(51) Int. Cl.: F24H 9/12, F16L 41/08

(54) **A tight union for connecting a plate to piping**

(71) Applicant: GIANNONI S.r.l., I-20079 Castiraga Vidardo (Milan) (IT)
(72) Inventor: Mele, Flavio, I-20079 S. Angelo Lodigiano Ld, Milano (IT)
(74) Representative: Falcetti, Carlo

(57) **Abstract**

A tight union for connecting a plate (3) to piping, in particular for heat exchangers of the plate-type in so-called combination boilers, formed by a cylindrical connection sleeve (1) with a connection ring nut (13) or threadway (5,16), provided within the cylindrical bore (4) of a rigid raised ring (6) forming with the cylindrical bore (4) a seat for a sealing gasket (2) and a securing abutment for a cylindrical neck (10) dished out of a plate (3), fitted into said cylindrical bore (4) and rolled over the raised ring (6) for unreleasably connecting the sleeve (1) to the plate (3), the connection tightness being ensured by the contact of the gasket (2) with the plate (3), the outer surface of the neck (10), the raised ring (6) and the cylindrical inner surface of the sleeve (1).

## Description

The present invention relates to a tight union for connecting a plate to piping, particularly for plate exchangers, tanks, and the like intended to contain liquids.

It is known that for connecting relatively thin-walled containers of liquids to piping, thickened wall regions must be provided locally in which threaded openings are formed for thread connection to unions which are threaded to match.

A tight fit is ensured by the threadway with the possible aid of sealants or fibrous, plastic, or resilient materials which are compressed as the unions are tightened down.

The local thickened wall regions are provided by welding or brasing on suitably shaped members made of a consistent material with that of the wall to be strengthened.

Alternatively, the unions may be attached, again by welding or brazing, directly to the wall.

Here too the material consistency, temperature and operating pressure play an essential role in the selection of the weld-braze materials and the materials for the union.

In plate exchangers and tanks for sanitary applications, mainly intended for supplying heated drinkable water, it is virtually indispensable that stainless steel be used in the construction of the plates, and this restricts the viable joining techniques to just brazing, while the use of plate strengthening members and unions also made of stainless steel becomes necessary, which raises costs significantly.

Further, the brazing process, which must be carried out within a furnace, is restricted, as concerns the furnace size, the characteristics of the thermal cycle and the fixtures employed, by the presence of the unions, and is a time-consuming and expensive one.

These drawbacks become serious especially in the manufacture of plate exchangers for boilers of the so-called combined type in household applications, where to ensure good efficiency of heat exchange along with adequate mechanical strength and corrosion resistance, relatively thin, stainless steel sheets with a thickness in the 0.4 mm range are used together with end plates also made of stainless steel and approximately 0.8 mm thick.

The unions, which are also made of stainless steel, are to be attached to the end plate, for connection to primary fluid and sanitary fluid inlet/outlet piping, by an accurate brazing process which requires the use of expensive and bulky fixtures in the course of the brazing process that leads to joining the various exchanger plates together and is made more complicated, time-comsuming and costly.

Such drawbacks are obviated by the tight union for connecting plates for piping, according to the present invention, which union is made of a far less expensive material, such as brass, and attached to the stainless steel plate by a cold rolling operation.

For the purpose, the plate is dished to form a cilindrical neck thereon which has a perpendicular axis to the plane of the plate and surrounds a circular opening in the plate for connection to the pipe.

The rolling acts on the free edge of the cylindrical neck to expand and press it against an annular inner shoulder on the union, thereby joining the union to the plate mechanically in an unreleasable way.

The tight fit of the resultant joint, even under relatively high pressures on the order of 20-30 bars, is ensured by a resilient seal placed between the cylindrical neck and the union and compressed between the plate and the shoulder on the union by the rolling process.

According to a further aspect of the present invention, the annular inner shoulder on the union is suitably shaped with a flat circular ring for compressing the seal and a conical or toroidal abutment surface for the neck seaming, thereby achieving an effectively tight connection, on the one side, and unbroken plastic deformation of the neck, on the other.

Preferably, but not necessarily, the seal consists of a resilient toroidal ring or O-ring seal.

In this way, the plate is provided with a union by subsequent steps to its forming and brazed joints to other elements for forming exchangers or tanks and the application, simple and economical, of the union will not interfere with previous assembly operations.

The features and advantages of the invention will be apparent from the following description of a preferred embodiment thereof and the accompanying drawings, in which:
Figure 1 is an exploded diametrical section, partly side view through a tight union for connecting a plate to piping in accordance with the present invention;
Figure 2 is a side view partly in diametrical section of the tight union of Figure 1 in its assembled state;
Figure 3 is a side view partly in diametrical section of a second type of tight union in accordance with the present invention;
Figure 4 is a side view partly in diametrical section of a third type of tight union in accordance with the present invention;
Figure 5 is a side view partly in diametrical section of a fourth type of tight union in accordance with the present invention.

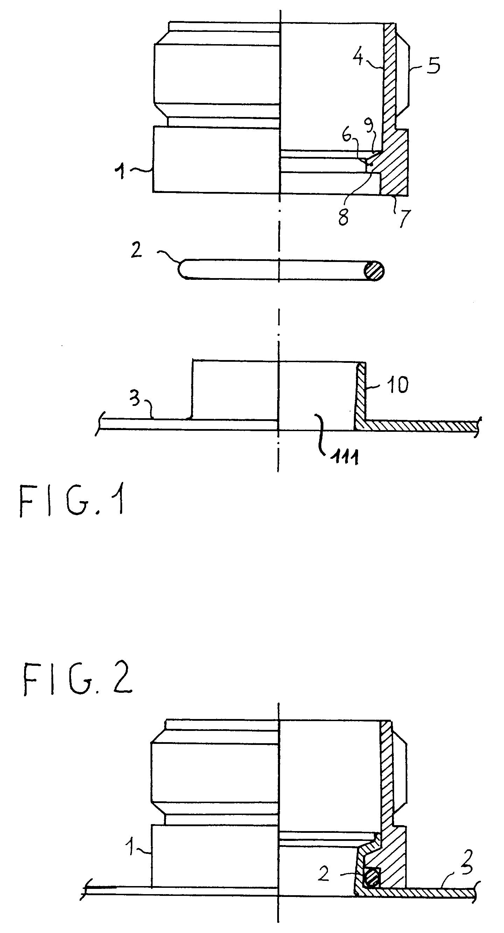

With reference to Figures 1 and 2, the tight union according to the invention comprises a cylindrical metal sleeve 1, an O-ring 2, and a metal plate 3.

The sleeve 1, having a cylindrical bore 4, is provided with an outside threadway 5 for connection to a pipe.

A toroidal ring 6 flares out inside the bore 4, a suitable distance away from one end 7 of the sleeve intended for connection to the plate 3.

The ring 6 has a flat annular ring surface 8 which forms a seat for the O-ring 2 between the ring 6 and the end surface 7.

The ring 6 also has a conical or toroidal surface 9 opposite from the flat surface 8.

The plate 3 is provided with a cylindrical neck 10 dished out of the plate.

In forming the neck 10, an opening 11 is cut through the plate which has the same diameter as the neck inside diameter.

With respect to the neck height and outside diameter, the neck thickness decreases toward its free end.

In order to prevent the development of cracks and excessively thin areas, it is recommended that the diameter of the neck be at least 2.5 times the neck height.

The outside diameter of the neck is equal, within tolerance, to the inside diameter of the ring 6.

The inside diameter of the O-ring 2 is slightly smaller than the outside diameter of the neck, and its outside diameter is slightly larger than the diameter of its seat in the sleeve 1.

The diastance of the surface 6 from the end 7 of the sleeve is slightly less than the height of the O-ring 2.

As the sleeve 1 including the O-ring 2 is fitted over the neck 10 such that the end surface 7 will contact the flat surface on the plate, the O-ring 2 is compressed in its seat to form four sealed joints with the outer wall of the neck 10, the annulus 8 of the ring 6, the cylindrical wall of its seat, and the surface of the plate 3, respectively.

The sleeve 1 is then secured fixedly on the plate 3 by a rolling operation flare the free edge from the neck 10 and fold it onto the conical or toroidal surface 9 of the ring 6.

In this way, a mechanically robust and irreversible joint is provided (Figure 2) between the sleeve 1 and the plate 3, whose tightness is ensured by the O-ring 2.

It should be understood that the union described in connection with Figures 1 and 2 is but one of several possible embodiments thereof.

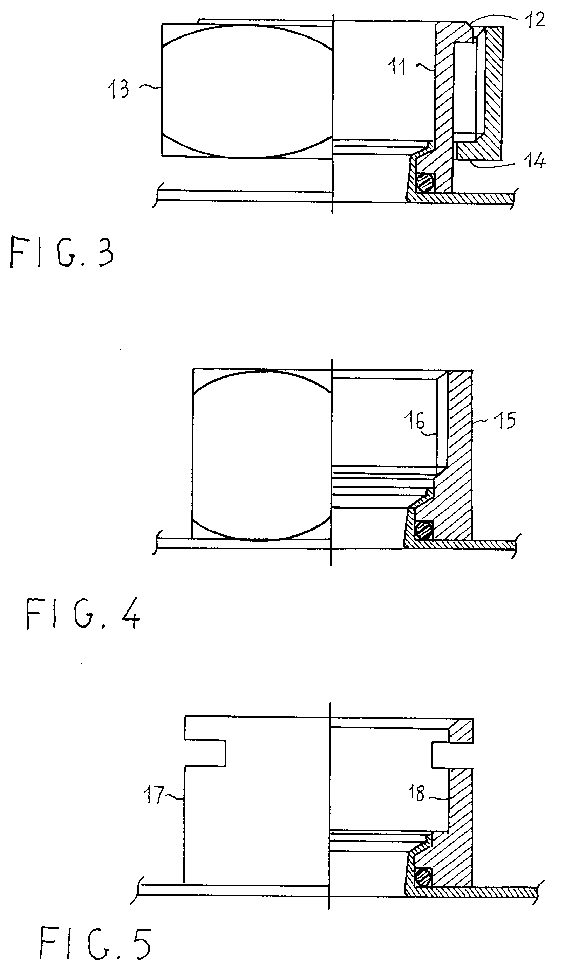

Figure 3 shows a second embodiment wherein the union comprises a relatively elongate sleeve 11 having a tight contact flange 12.

An inside threaded ring nut 13 is fitted over the sleeve 11 which has a shoulder 14 arranged to cooperate with the flange 12 for forming a tight end joint with an intervening seal, of a conventional type.

Figure 4 depicts a third embodiment, similar to that shown in Figure 2 but having the sleeve 15 provided with an inside rather than outside threadway 16, and Figure 5 depicts a further embodiment, similar to that shown in Figure 4 but having the sleeve 17 provided with a cylindrical inner surface 18 adapted to receive a quick connector (requiring no fasteners) with sealing gaskets.

It has been found experimentally that unions so formed can withstand normal joint tightening torques by transferring them to the plate.

For this reason, Figures 1 to 3 show no hexagon, square nuts or wrench engagement arrangements on the sleeves, such as may be provided (as shown in Figure 4, for instance) to work, using standard tools, against any tightening/loosening torques applied to the sleeves by friction, thereby preventing the formed joint from becoming loaded torsionally.

Reference has been made in the foregoing description to a generic metal for use in the making of the plate and the sleeve.

It will be appreciated that one may choose from a range of different materials to meet individual applicational requirements.

Thus, for sanitary appliances, and particularly plate exchangers, a preferred material for the plate is a stainless steel, but may be ordinary brass for the sleeve.

In different applications, such as with containers for room-temperature low-pressure fluids, the sleeve could be made of reinforced plastics and the plate of zinc- or tin-galvanized sheet metal.

## Claims

1. A tight union for connecting a plate to piping, in particular for hydraulic appliances wherein the hydraulic appliance includes a metal plate (3), forming a hydraulic chamber or vat to be connected to a pipe, comprising:
a cylindrical neck (10) having a perpendicular axis to said plate (3) and being dished out of said plate (3), which defines a cylindrical opening for accessing said chamber;
a sleeve (1) having a cylindrical bore (4) with a larger diameter than the inside diameter of said neck (10) and being fitted over said neck with an end surface (7) abutting on said plate (3), said sleeve (1) being provided within said bore (4) and near said end surface (7) with a rigid raised ring (6) within said bore (4), the inside diameter of said rigid ring being substantially the same as the outside diameter of said neck;
a resilient elastomer ring (2) fitted onto the exterior of said neck (10), inside said bore (4), and compressed between said plate (3) and said rigid ring (6), said cylindrical neck (10) being cold deformed at its free end and folded into said bore and over the remotest surface (9) of said rigid ring (6) from said plate to provide an unreleasable seam between said sleeve (1) and said plate (3), said sleeve (1) being provided with a mechanical means (5) of connection to a pipe.

2. A connection arrangement as in Claim 1, wherein said resilient ring (2) is a toroidal ring (O-ring).

3. A connection arrangement as in any of the preceding claims, wherein said rigid ring (6) has a flat annular surface (8) for said resilient ring to abut against.

4. A connection arrangement as in any of the preceding claims, wherein said remotest rigid ring surface (9) from said plate (3) is frusto-conical.

5. A connection arrangement as in Claims 1 or 2, wherein said remotest surface is toroidal.

6. A connection arrangement as in any of the preceding claims, wherein said plate (3) is made of a stainless steel and said sleeve (1) is made of brass.

7. A connection arrangement as in any of the preceding claims, wherein said means of mechanical connection comprises an outside threadway (5) on said sleeve (1).

8. A connection arrangement as in any of Claims 1 to 6, wherein said means of mechanical connection comprises a tightening ring nut (13) fitted over said sleeve (1), being inside threaded and provided with an abutment shoulder (14) cooperating with a flared ring-shaped abutment portion (12) of said sleeve.

9. A connection arrangement as in any of Claims 1 to 6, wherein said means of mechanical connection comprises an inside threaway (16) in said sleeve (15).

10. A connection arrangement as in any of Claims 1 to 6, wherein said means of mechanical connection comprises a cylindrical inside seat (18) in said sleeve (17) for connection to a quick connector provided with a sealing gasket.
